**Europäisches Patentamt**

**European Patent Office**

**Office européen des brevets**

(19)

(11) Veröffentlichungsnummer : **0 334 158 B1**

(12) ## EUROPÄISCHE PATENTSCHRIFT

(45) Veröffentlichungstag der Patentschrift :
13.11.91 Patentblatt 91/46

(51) Int. Cl.⁵ : **A21B 1/24**

(21) Anmeldenummer : **89104444.8**

(22) Anmeldetag : **14.03.89**

(54) **Backofen.**

(30) Priorität : 22.03.88 DE 3811534

(43) Veröffentlichungstag der Anmeldung :
27.09.89 Patentblatt 89/39

(45) Bekanntmachung des Hinweises auf die
Patenterteilung :
13.11.91 Patentblatt 91/46

(84) Benannte Vertragsstaaten :
AT DE FR GR IT

(56) Entgegenhaltungen :
AU-A- 451 611
DE-A- 3 130 064
GB-A- 2 064 937
US-A- 4 307 286

(73) Patentinhaber : Werner & Pfleiderer GmbH
Theodorstrasse 10 Postfach 30 12 20
W-7000 Stuttgart 30 (DE)

(72) Erfinder : Schröder, Helmut, Dipl.-Ing. (FH)
Im Krautgarten 10
W-7120 Bietigheim-Bissingen (DE)

## Beschreibung

Die Erfindung bezieht sich auf einen Backofen nach dem Oberbegriff des Patentanspruches 1.

Bei dieser Gattung von Backöfen ist für den periodischen Wechsel der Strömungsrichtung der Heißluft nur ein einziges Steuerelement in Gestalt eines Drehkörpers vorgesehen. Damit unterscheidet sich diese Gattung vorteilhaft von den sonst üblichen Heißluftbacköfen, bei denen zwei entgegengesetzt betätigte Umsteuerklappen mit je einem Antrieb vorgesehen sind (DE-PS 3130064). Durch die Verwendung eines Drehkörpers verringert sich nicht nur der Aufwand für Antriebsmotoren und die dazugehörenden elektrischen Schalt-und Steuermittel um die Hälfte, es nimmt auch die Störanfälligkeit beträchtlich ab.

Ein aus der US-PS 4032289 bekannter Backofen der eingangs genannten Gattung ist trotz der erwähnten Vorteile eines einzigen Steuerelements nicht zufriedenstellend. Bei diesem Backofen ist der um eine vertikale Achse rotierende Drehkörper für die Umsteuerung der Heißluft ähnlich wie der Läufer eines Radialventilators gestaltet und zentrisch über der Backkammer angeordnet. Der Durchmesser des Drehkörpers entspricht etwa dem eines Kreises, welcher dem Grundriß der Backkammer einbeschrieben ist. Der druckseitige Kanal des Gebläses ist in einer Ebene oberhalb des Drehkörpers angeordnet und mündet mit einer waagrechten Öffnung in dessen Stirnseite. Darunter befindet sich in einer weiteren Ebene ein Kanal, durch den die von der Backkammer zurückströmende Heißluft um den oberen Teil des Drehkörpers zum Heißlufterzeuger und damit zurück zum Gebläse gelangt. In einer dritten Ebene ist der untere Teil des Drehkörpers von waagrechten Leitungen umgeben, die von den Durchlässen des Drehkörpers zu den Verteilerkanälen an den Seitenwänden der Backkammer führen. Diese Konstruktion des Drehkörpers und des ihn umgebenden Steuerraums ist sehr aufwendig und benötigt viel Platz.

Wegen des Antriebs des Drehkörpers von oben können dort keine anderen Vorrichtungen angeordnet werden. Der ganze Platz über dem Backofen wird von den Antriebsmitteln in Anspruch genommen. Deshalb sind der Heißlufterzeuger und das Gebläse seitlich am Backofen angeordnet, wodurch lange Leitungsverbindungen für die Heißluft und eine große Aufstellfläche des Backofens erforderlich werden.

Ein weiterer Nachteil des bekannten Backofens besteht darin, daß die an die Durchlässe des Drehkörpers in der unteren Ebene des Steuerraums anschließenden waagrechten Leitungen nicht unmittelbar zu den Verteilerkanälen, sondern zu diesen vorgeschalteten vertikalen Kammern führen. Diese Bauweise erfordert nicht nur einen großen Herstellungsaufwand, sondern verursacht auch erhebliche Strömungsverluste, die noch durch die oben erwähnten langen Leitungsverbindungen sowie die zahlreichen Umlenkungen im Steuerraum bzw. in den Durchlässen des Drehkörpers verstärkt werden. Für die Umwälzung der Heißluft ist daher ein groß dimensioniertes Gebläse mit hoher Antriebsleistung notwendig.

Schliesslich ist es mit dem bei dem bekannten Backofen verwendeten Drehkörper nicht möglich, so wie mit den Umsteuerklappen nach der DE-PS 3130064 während des Beschickens und Beschwadens die Heissluftzuführung zur Backkammer trotz Aufrechterhaltung des Betriebes von Heisslufterzeuger und Gebläse zu unterbrechen. Die Folge davon sind erhebliche Wärme- und Zeitverluste.

Der Erfindung liegt die Aufgabe zugrunde, einen Backofen gemäss dem Oberbegriff des Patentanspruches 1 mit kurzen Strömungswegen und kompaktem Aufbau zu schaffen, welcher alle backtechnischen Möglichkeiten eines Heissluft-Backofens mit zwei Umsteuerklappen aufweist.

Diese Aufgabe wird erfindungsgemäss durch die im Kennzeichnungsteil des Patentanspruches 1 angegebenen Merkmale gelöst.

Durch die horizontale Anordnung des Drehkörpers und die Erstreckung seiner Durchlässe über die ganze Tiefe des Steuerraumes gelangt die Heissluft ohne zusätzliche Leitungen oder Kammern in gleichmässig breitem Strom vom Steuerraum zu den Verteilerkanälen. Infolgedessen ergibt sich über die Tiefe der Backkammer eine sehr ausgeglichene Wärmeverteilung, was Voraussetzung für ein gutes Backergebnis ist. Die aus der Backkammer zurückströmende Heissluft gelangt ebenfalls in breitem Strom zum Heisslufterzeuger, welcher dadurch gleichmässig beaufschlagt wird und seine Wärme gut verteilt auf die Heissluft überträgt. Mit dem erfindungsgemässen Drehkörper kann neben der vorteilhaften Umkehrung auch eine Unterbrechung der Durchströmung der Backkammer erzielt werden. Überdies ergibt sich eine geringe Höhe des Heissluft-Steuerraumes, was sich auf die Gesamtbauhöhe des Backofens günstig auswirkt.

Mit den Merkmalen des Patentanspruches 2 wird eine gute Abdichtung der vertikalen Begrenzung des Drehkörpers erreicht.

Die Merkmale der Patentansprüche 3 und 6 bewirken eine strömungsgünstige Gestaltung des ersten Durchlasses des Drehkörpers und eine gleichmässige Verteilung der aus ihm austretenden Heissluft.

Mit den Merkmalen des Patentanspruches 4 wird der erste Durchlass zu einem bis auf den Auslassschlitz geschlossenen Druckkanal, aus dem ein gleichmässig breiter Luftstrom austritt. Das Merkmal des Anspruches 5 trägt zur Vergleichmässigung der Ausströmung bei.

Die Merkmale der Patentansprüche 7 und 8 ergeben eine sehr strömungsgünstige und platzsparende

EP 0 334 158 B1

Anordnung von Heisslufterzeuger und Gebläse und führen zu einer kompakten Bauform des Backofens.

Die in den Zeichnungen dargestellten Ausführungsbeispiele sind nachstehend beschrieben. Es zeigen

| Fig. 1 | einen Vertikalschnitt durch einen Backofen nach der Linie I-I in Fig. 3, |
|---|---|
| Fig. 2 | einen Horizontalschnitt nach der Linie II-II in Fig. 1, |
| Fig. 3 | einen Horizontalschnitt nach der Linie III-III in Fig. 1, |
| Fig. 4 und 5 | den oberen Teil des Vertikalschnitts gemäß Fig. 1 mit unterschiedlichen Stellungen des Drehkörpers, |
| Fig. 6 | eine auseinandergezogene perspektivische Darstellung des Drehkörpers und des angrenzenden Teils des Druckkanals, |
| Fig. 7 und 8 | Horizontalschnitte durch andere Ausführungsformen des Drehkörpers und |
| Fig. 9 | einen Vertikalschnitt durch eine weitere Ausführungsform des Drehkörpers. |

Der Backofen weist eine im Grundriß rechteckige Backkammer 1 auf, in welcher sich das Backgut auf einem fahrbaren Hordengestell 2 befindet. Die sich gegenüberstehenden Seitenwände 3 und 4 der Backkammer sind mit Durchtrittsöffnungen 5 für die Heißluft und rückseitig mit Verteilerkanälen 6 und 7 versehen.

Unmittelbar über der Backkammer 1 ist ein Steuerraum 8 für die Heißluft und wiederum unmittelbar darüber ein Heizraum 9 mit einem Heißlufterzeuger 10 angeordnet. Letzterer wird von einem an der Stirnseite des Heizraumes befindlichen Brenner 10' beheizt. Der Heizraum 9 stellt zugleich den Saugraum eines an seiner Stirnseite angeordneten Gebläses 11 mit Antriebsmotor 11' dar. Dessen Druckraum 12 befindet sich ebenfalls an der Stirnseite des Heizraums 9 und reicht bis zur Stirnseite des Steuerraums 8. Ein Isoliergehäuse 13 umschließt die vorstehend genannten Bauteile des Backofens.

Der zur periodischen Umsteuerung der Strömungsrichtung der Heißluft im Steuerraum 8 vorgesehene Drehkörper hat die Gestalt eines Doppelflügels 14, welcher auf einer um eine horizontale Achse drehbaren Welle 15 im Steuerraum 8 angeordnet ist. Die Welle 15 ist in der Rückwand des Steuerraums 8 und in der Stirnwand des Druckraums 12 gelagert und von einem Steuermotor 16 angetrieben. Der Steuermotor 16 ist ebenso wie der Brenner 10' und das Gebläse 11 samt Antriebsmotor 11' leicht zugänglich an der Stirnseite des Backofens angeordnet.

Die eine Seite des Doppelflügels 14 bildet den ersten Durchlaß 17, welcher ab einer Längskante 18 bis zu einem Drehwinkel von mindestens 90° von einem teilzylindrischen Mantel 19 umgeben ist und die Zuführung der Heißluft zu einem der Verteilerkanäle 6, 7 darstellt. Die andere Seite des Doppelflügels 14 bildet den zweiten Durchlaß 20, welcher an der Vorderseite mit einer halbkreisförmigen Abdeckung 21 gegenüber der kreisförmigen Mündung 22 des Druckraums 12 abgegrenzt ist und die Rückführung für die aus einem der gegenüberliegenden Verteilerkanäle 6, 7 abströmende Heißluft zum Heißlufterzeuger 10 darstellt. Im ersten Durchlaß 17 wird der vom Gebläse 11 durch die Mündung 22 gedrückte Heißluftstrom umgelenkt und über die Tiefe des Durchlasses verteilt. Um die Strömung zu begünstigen und eine gleichmäßige Verteilung zu erzielen, ist gemäß Fig. 7 die halbkreisförmige Abdeckung 21 gegen den ersten Durchlaß 17 zu trichterförmig gestaltet. Gemäß Fig. 8 ist zusätzlich ein sich über die ganze Tiefe des Durchlasses 17 erstreckendes Leitblech 23 vorgesehen. Bei der Ausführung nach Fig. 8 ist außerdem noch die Innenseite des teilzylindrischen Mantels mit radialen Umlenkblechen 24 versehen.

Um die Leckverluste möglichst gering zu halten, sind an der Vorder-und Rückseite des Doppelflügels 14 Labyrinthdichtungen angeordnet. Diese werden an der Vorderseite von einem die Mündung 22 umgebenden zylindrischen Kragen 25 und einem darübergreifenden zylindrischen Rand 26 der Abdeckung 21 sowie des Mantels 19 und an der Rückseite von einem zylindrischen Kragen 27 an der Rückwand des Steuerraums 8 und einem ihn übergreifenden zylindrischen Rand 28 einer auf der Welle 15 befestigten Kreisscheibe 29 gebildet.

Entlang der anderen Längskante 30 des Doppelflügels 14 befindet sich auf der Seite des ersten Durchlasses 17 eine schmale Dichtlippe 31. Bei der Ausführung gemäß Fig. 9 wird deren Funktion ersetzt durch den von der einen Längskante 18 bis zu der anderen Längskante 30 sich erstreckenden teilzylindrischen Mantel 19, welcher einen über die ganze Tiefe des Doppelflügels 14 reichende Auslaßschlitz 32 aufweist. Der Auslaßschlitz 32 stellt die Mündung einer von zwei einwärts gerichteten Schenkeln 33 und 34 gebildeten Düse dar. Zum Einstellen des austretenden Heißluftstroms ist der Schenkel 34 in Umfangsrichtung verstellbar.

Der von dem Doppelflügel 14 beschriebene Drehkreis berührt die obere und untere Begrenzung des Steuerraums 8 sowie eine vertikale Begrenzung dieses Raums oder das Ende einer sich von der vertikalen Begrenzung in Höhe der Drehachse des Doppelflügels 14 horizontal erstreckenden Zunge 35. Die Höhe des Steuerraums 8 entspricht also dem Durchmesser dieses Drehkreises, welcher in der Praxis ca. 100 mm beträgt. Die Zunge 35 hat den Zweck, eine genaue Einstellung des für die Drehung des Doppelflügels 14 notwendigen Bewegungsspalts und zugleich eine gute Abdichtung vornehmen zu können. Bei genauer Fertigung des Back-

3

ofens oder horizontaler Verstellbarkeit der Lager des Doppelflügels 14 kann auf die Zunge 35 verzichtet werden, wie Fig. 9 zeigt.

Der Steuerraum 8 ist an beiden Seiten seiner unteren Begrenzung mit den Verteilerkanälen 6, 7 verbunden. Neben der von dem Drehkreis des Doppelflügels 14 berührten vertikalen Begrenzung des Steuerraums 8 befindet sich eine Verbindung mit dem Heizraum 9. Die Verbindungen erstrecken sich ebenso wie die Durchlässe 17, 20 des Doppelflügels 14 jeweils über die ganze Tiefe des Steuerraums 8. Da die Backkammer 1 und der Heizraum 9 etwa dieselbe Tiefe wie der Steuerraum 8 aufweisen, wird durch den gesamten Backofen mit Ausnahme des Druckraums 12 ein gleichmäßig breiter Heißluftstrom umgewälzt.

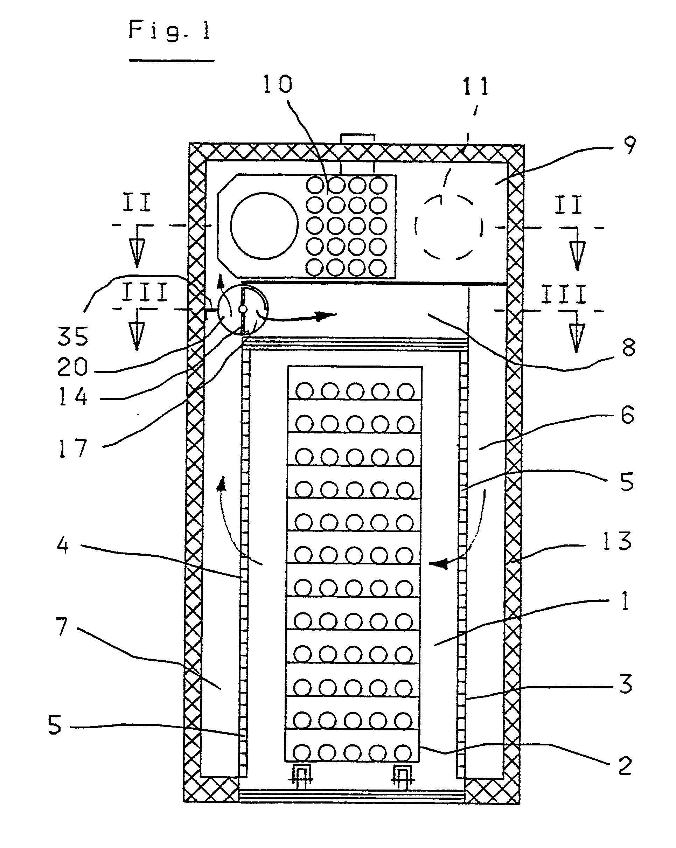

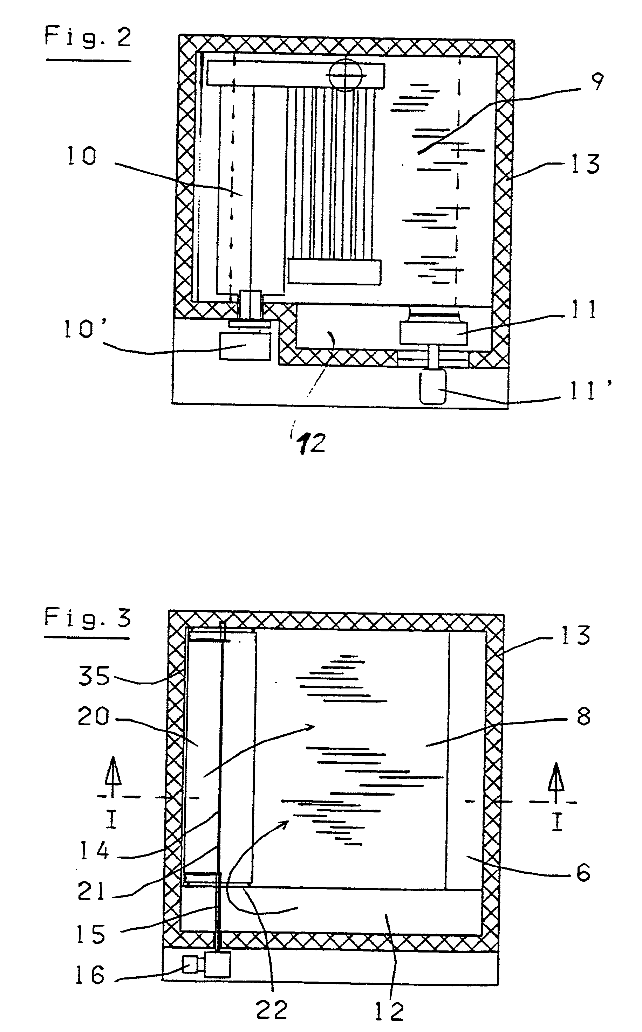

Anhand der Fig. 1, 4 und 5 wird nun die Funktion des Doppelflügels 14 beschrieben, wobei die in den Zeichnungen eingetragenen Richtungspfeile die Bewegung der Heißluft anzeigen.

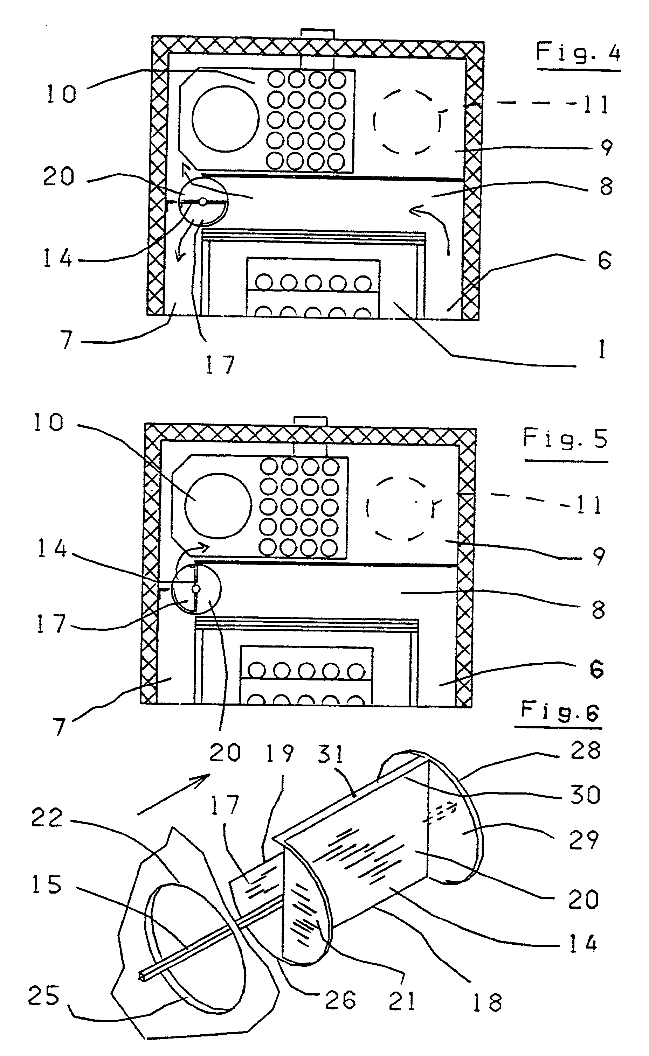

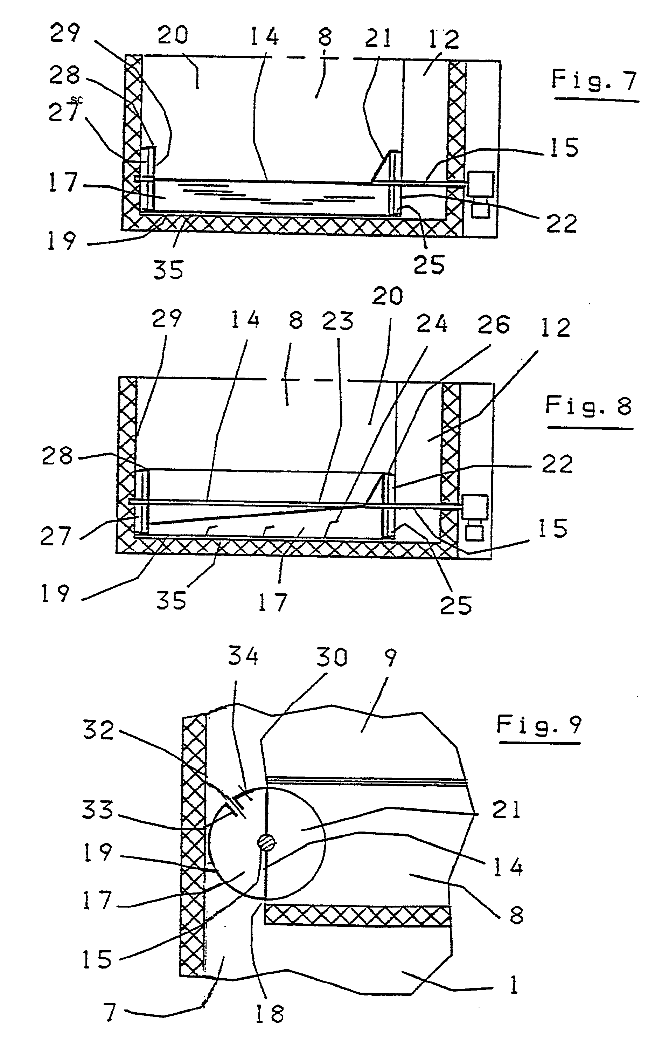

Beim normalen Betrieb des Backofens wird der Doppelflügel 14 durch den Steuermotor 16 abwechselnd in die aus den Fig. 1 und 4 ersichtlichen Stellungen gedreht. In der Darstellung gemäß Fig. 1 saugt das Gebläse die Heißluft aus dem Heizraum 9 und leitet sie über den Druckraum 12 und dessen kreisförmige Mündung 22 zur Stirnseite des Doppelflügels 14. An der halbkreisförmigen Abdeckung 21 vorbei gelangt die Heißluft durch den ersten Durchlaß 17 in breitem Strom in den Steuerraum 8 und von diesem in den Verteilerkanal 6. Von dort strömt die Heißluft durch die Backkammer 1 und den Verteilerkanal 7 sowie den zweiten Durchlaß 20 zurück in den Heizraum 9, wo sie den Heißlufterzeuger 10 beaufschlagt. Nach einer Drehung des Doppelflügels 14 um 90° im Uhrzeigersinn gelangt die Heißluft vom Gebläse 11 durch den ersten Durchlaß 17 unmittelbar in den Verteilerkanal 7. Dabei verhindert der teilzylindrische Mantel 19 den Zutritt zum Steuerraum 8. Danach durchströmt die Heißluft die Backkammer 1 in entgegengesetzter Richtung und gelangt vom Verteilerkanal 6 in den Steuerraum 8 und von dort durch den Durchlaß 20 zurück in den Heizraum 9. Beim nächsten Steuerschritt wird der Doppelflügel wieder um 90° in die aus Fig. 1 ersichtliche Stellung zurückgedreht, worauf sich der beschriebene Vorgang wiederholt.

In Fig. 5 ist eine weitere Stellung des Doppelflügels 14 gezeigt, in welcher die Heißluft vom Gebläse 11 und durch den ersten Durchlaß 17 unmittelbar, d.h. ohne in die Backkammer 1 zu gelangen, zurück in den Heizraum 9 strömt. Um in diese Stellung zu kommen, muß der Doppelflügel 14 aus der Stellung gemäß Fig. 4 nochmals um 90° im Uhrzeigersinn gedreht werden. Dann versperrt der teilzylindrische Mantel 19 den Eintritt in den Verteilerkanal 7 und der Doppelflügel 14 den Durchtritt durch den Steuerraum 8 zum Verteilerkanal 6. Diese Stellung des Doppelflügels 14 ist beim Beschicken und nachfolgenden Beschwaden der Backkammer 1 vorgesehen, weil während dieser Vorgänge keine Umwälzung der Heißluft durch die Backkammer 1 erfolgen soll. Die während dessen in einem kleinen Kreislauf zirkulierende Heißluft steht nach Beendigung der erwähnten Vorgänge sofort wieder für die Beheizung der Backkammer 1 zur Verfügung.

## Patentansprüche

1. Backofen mit einer im Grundriss rechteckigen Backkammer (1), durch welche Heissluft in periodisch wechselnden Richtungen zwischen sich gegenüberliegenden, mit Durchtrittsöffnungen (5) und rückseitig mit einem Verteilerkanal (6, 7) versehenen Seitenwänden (3, 4) hindurchströmbar ist, einem Heisslufterzeuger (10), einem diesem nachgeschalteten Gebläse (11) und einem in einem Steuerraum (8) unmittelbar über der Backkammer (1) angeordneten Drehkörper (14) zum periodischen Umsteuern der Strömungsrichtung der Heissluft mit zwei Durchlässen (17, 20), von denen der erste (17) eine stirnseitig mit einer kreisförmigen Mündung (22) eines Druckraums (12) des Gebläses (11) ständig in Verbindung stehende Zuführung der Heissluft zu dem Verteilerkanal (6, 7) einer Seitenwand (3, 4) darstellt und von denen der zweite (20) eine Rückführung für die aus dem Verteilerkanal (7, 6) der gegenüberliegenden Seitenwand (4, 3) abströmende Heissluft zum Heisslufterzeuger (10) bildet, dadurch gekennzeichnet, dass der Drehkörper (14) um eine horizontale Achse drehbar ist und die Durchlässe (17, 20) sich über die gesamte Tiefe des Steuerraumes (8) erstrecken, wobei der dabei beschriebene Drehkreis des aus einem Doppelflügel (14) bestehenden Drehkörpers die obere und die untere Begrenzung des Steuerraumes (8) sowie eine vertikale Begrenzung dieses Raumes berührt, wobei der Steuerraum (8) an beiden Seiten seiner unteren Begrenzung mit den Verteilerkanälen (6, 7) verbunden ist und neben der von dem Drehkreis des Drehkörpers (14) berührten vertikalen Begrenzung mit dem Heizraum (9) in Verbindung steht, und dass die eine Seite des Doppelflügels (14) den ersten Durchlass (17) bildet und ab einer Längskante (18) bis zu einem Drehwinkel von mindestens 90° von einem teilzylindrischen Mantel (19) umgeben ist und dessen andere Seite den zweiten Durchlass (20) darstellt, welcher mit einer halbkreisförmigen Abdeckung (21) gegenüber der Mündung (22) des Druckraumes (12) des Gebläses (11) abgegrenzt ist.

2. Backofen nach Anspruch 1, dadurch gekennzeichnet, dass zur vertikalen Begrenzung des Steuerraumes (8) in Höhe der Drehachse des Drehkörpers (14) eine sich horizontal erstreckende Zunge (35) vorgesehen ist.

3. Backofen nach Anspruch 1, dadurch gekennzeichnet, dass die halbkreisförmige Abdeckung (21) gegen den ersten Durchlass (17) zu trichterförmig gestaltet ist (Fig. 7).

4. Backofen nach Anspruch 1, dadurch gekennzeichnet, dass der teilzylindrische Mantel (19) sich bis zur anderen Längskante (30) des Doppelflügels (14) erstreckt und einen über die ganze Tiefe reichenden Auslassschlitz (32) aufweist.

5. Backofen nach Anspruch 4, dadurch gekennzeichnet, dass der Auslassschlitz (32) die Mündung einer von zwei einwärts gerichteten Schenkeln (33, 34) gebildeten Düse darstellt und einer der Schenkel (34) in Umfangsrichtung verstellbar ist.

6. Backofen nach einem oder mehreren Ansprüche 1 bis 5, dadurch gekennzeichnet, dass der erste Durchlass (17) des Doppelflügels (14) ein sich über die ganze Tiefe erstreckendes schräges Leitblech (23) und an der Innenseite des teilzylindrischen Mantels (19) radiale Umlenkbleche (24) aufweist.

7. Backofen nach einem oder mehreren Ansprüche 1 bis 6, dadurch gekennzeichnet, dass der Heisslufterzeuger (10) in einem über dem Steuerraum (8) vorgesehenen Heizraum (9) angeordnet ist.

8. Backofen nach Anspruch 7, dadurch gekennzeichnet, dass das Gebläse (11) und dessen Druckraum (12) an der Stirnseite des Heizraums (9) angeordnet ist.

## Claims

1. Baking oven with a baking chamber (1), which is rectangular in plan view and through which hot air can be made to flow in periodically changing directions between mutually opposite side walls (3, 4) provided with a distributor channel (6, 7) at the rear side and with passage openings (5), a hot air generator (10), a blower (11) connected downstream thereof and a rotary body (14), which is arranged in a control space (8) directly above the baking chamber (1), for the periodic switching -over of the direction of flow and has two passages (17, 20), of which the first (17) represents a feed, which stands constantly in connection at an end face with a circular mouth (22) of a pressure space (12) of the blower (11), of the hot air to the distributor channel (6, 7) of a side wall (3, 4) and of which the second (20) forms a return for the hot air, which flows away out of the distributor channel (6, 7) of the opposite side wall (4, 3), to the hot air generator (10), characterised thereby, that the rotary body (14) is rotatable about an horizontal axis and the passages (17, 20) extend over the entire depth of the control space (8), wherein the circle of rotation described in that case by the rotary body consisting of a double vane (14) touches the upper and the lower boundary of the control space (8) as well as a vertical boundary of this space, wherein the control space (8) is connected at both sides of its lower boundary with the distributor channels (6, 7) and stands in connection with the heating space (9) beside the vertical boundary touched by the circle of rotation of the rotary body (14), and that the one side of the double vane (14) forms the first passage (17) and is surrounded by a part-cylindrical casing (19) from a longitudinal edge (18) through an angle of rotation of at least 90° and its other side represents the second passage (20), which is separated from the mouth (22) of the pressure space (12) of the blower (11) by a semicircular cover (21).

2. Baking oven according to claim 1, characterised thereby, that a horizontally extending tongue (35) is provided at the height of the rotational axis of the rotary body (14) for the vertical boundary of the control space (8).

3. Baking oven according to claim 1, characterised thereby, that the semicircular cover (21) is structured in funnel shape towards the first passage (17) (Figure 7).

4. Baking oven according to claim 1, characterised thereby, that the part-cylindrical casing (19) extends to the other longitudinal edge (30) of the double vane (14) and displays an outlet slot (32) reaching across the entire depth.

5. Baking oven according to claim 4, characterised thereby, that the outlet slot (32) represents the mouth of a nozzle formed by two inwardly directed limbs (33, 34) and one of the limbs (34) is adjustable in circumferential direction.

6. Baking oven according to one or more of the claims 1 to 5, characterised thereby, that the first passage (17) of the double vane (14) displays an oblique metal guide plate (23) extending over the entire depth and radial metal deflecting plates (24) at the inward side of the part-cylindrical casing (19).

7. Baking oven according to one or more of the claims 1 to 6, characterised thereby, that the hot air generator (10) is arranged in a heating space (9) provided above the control space (8).

8. Baking oven according to claim 7, characterised thereby, that the blower (11) and its pressure space (12) are arranged at the end face of the heating space (9).

**Revendications**

1. Four de boulangerie comportant une chambre (1) de cuisson, de contour rectangulaire quand elle est vue en plan, que le l'air chaud peut traverser en s'écoulant, selon des directions qui changent périodiquement, entre des parois latérales (3, 4) situées en face l'une de l'autre et présentant des ouvertures (5) de passage et, à l'arrière, un canal (6, 7) de répartition, comportant aussi un dispositif (10) de production d'air chaud, un ventilateur (11) monté en aval de celui-ci, et un organe tournant (14), disposé dans un espace (8) d'orientation immédiatement au-dessus de la chambre (1) de cuisson, pour modifier périodiquement l'orientation de la direction de l'écoulement de l'air chaud et présentant deux passages (17, 20), dont le premier (17) représente une arrivée, en liaison permanente, côté frontal, avec embouchure circulaire (22) d'une chambre (12) de pression du ventilateur (11), de l'air chaud dans le canal (6, 7) de répartition d'une paroi latérale (3, 4), et dont le second (20) forme un retour vers le dispositif (10) de production d'air chaud pour l'air chaud sortant du canal (7, 6) de répartition de la paroi latérale (4, 3) située en face, four caractérisé par le fait que l'organe tournant (14) peut tourner autour d'un axe horizontal et que les passages (17, 20) s'étendent sur toute la profondeur de l'espace (8) d'orientation, étant précisé que le cercle enveloppe qu'y décrit l'organe tournant, constitué d'une pale double (14), vient tangenter la limite supérieure et la limite inférieure de l'espace (8) d'orientation ainsi qu'une limite verticale de cet espace, étant précisé que l'espace (8) d'orientation est relié, des deux côtés de sa limite inférieure, aux canaux (6, 7) de répartition et qu'à côté de la limite verticale tangentée par le cercle enveloppe de l'organe tournant (14), il est relié à l'espace (9) de chauffe, et par le fait que le premier côté de la pale double (14) forme le premier passage (17) et que, d'une arête longitudinale (18) jusqu'à un angle au centre d'environ 90°, il est entouré par une enveloppe partiellement cylindrique (19) et que son autre côté représente le second passage (20), qui est limité par un capot (21) de forme semi-circulaire par rapport à l'embouchure (22) de l'espace de pression (12) du ventilateur (11).

2. Four de boulangerie selon la revendication 1, caractérisé par le fait que, comme limite verticale de l'espace d'orientation (8) au niveau de l'axe de rotation de l'organe tournant (14), est prévue une barrette (35) qui s'étend horizontalement.

3. Four de boulangerie selon la revendication 1, caractérisé par le fait que le capot (21) de forme semi-circulaire est conçu en forme d'entonnoir en direction du premier passage (17) (figure 7).

4. Four de boulangerie selon la revendication 1, caractérisé par le fait que l'enveloppe partiellement cylindrique (19) s'étend jusqu'à l'autre arête longitudinale (30) de la pale double (14) et présente une fente (32) de sortie, qui s'étend sur toute la profondeur.

5. Four de boulangerie selon la revendication 4, caractérisé par le fait que la fente (32) de sortie représente l'embouchure d'une buse formée de deux ailes (33, 34) dirigées vers l'intérieur et que l'une des ailes (34) est réglable en direction périphérique.

6. Four de boulangerie selon l'une ou plusieurs des revendications 1 à 5, caractérisé par le fait que le premier passage (17) de la pale double (14) présente une chicane (23) oblique, qui s'étend sur toute la profondeur et, sur la face intérieure de l'enveloppe partiellement cylindrique (9), des déflecteurs radiaux (24).

7. Four de boulangerie selon l'une ou plusieurs des revendications 1 à 6, caractérisé par le fait que le dispositif (10) de production d'air chaud est disposé dans un espace (9) de chauffe prévu au-dessus de l'espace (8) d'orientation.

8. Four de boulangerie selon la revendication 7, caractérisé par le fait que le ventilateur (11) et son espace (12) de pression sont disposés contre la face frontale (9) de chauffe.

Fig. 1

Fig. 2

Fig. 3

Fig. 4

Fig. 5

Fig. 6

Fig. 7

Fig. 8

Fig. 9